Europäisches Patentamt

European Patent Office

Office européen des brevets

(19)

(11) **EP 1 131 813 B1**

(12) **FASCICULE DE BREVET EUROPEEN**

(45) Date de publication et mention
de la délivrance du brevet:
**02.04.2003 Bulletin 2003/14**

(21) Numéro de dépôt: **99956096.4**

(22) Date de dépôt: **19.11.1999**

(51) Int Cl.⁷: **G10L 15/20**

(86) Numéro de dépôt international:
**PCT/FR99/02852**

(87) Numéro de publication internationale:
**WO 00/031728 (02.06.2000 Gazette 2000/22)**

(54) **PROCEDE DE RECONNAISSANCE VOCALE DANS UN SIGNAL ACOUSTIQUE BRUITE ET SYSTEME METTANT EN OEUVRE CE PROCEDE**

VERFAHREN UND VORRICHTUNG ZUR SPRACHERKENNUNG EINES MIT STÖRUNGEN
BEHAFTETEN AKUSTISCHEN SIGNALS

SPEECH RECOGNITION METHOD IN A NOISY ACOUSTIC SIGNAL AND IMPLEMENTING
SYSTEM

(84) Etats contractants désignés:
**BE DE FR GB NL SE**

(30) Priorité: **20.11.1998 FR 9814641**

(43) Date de publication de la demande:
**12.09.2001 Bulletin 2001/37**

(73) Titulaire: **Thales Avionics S.A.**
**78141 Vélizy-Villacoublay (FR)**

(72) Inventeur: **BRETON, Pierre-Albert,**
**Thomson-CSF P.I.D.B.**
**F-94117 Arcueil Cedex (FR)**

(74) Mandataire: **Guérin, Michel**
**THALES Intellectual Property**
**13, Avenue du Président Salvador Allende**
**94117 Arcueil Cédex (FR)**

(56) Documents cités:
**WO-A-97/33273** **US-A- 5 696 878**

- **VERGIN R ET AL: "Compensated mel frequency
  cepstrum coefficients" 1996 IEEE
  INTERNATIONAL CONFERENCE ON
  ACOUSTICS, SPEECH, AND SIGNAL
  PROCESSING CONFERENCE PROCEEDINGS
  (CAT. NO.96CH35903), 1996 IEEE
  INTERNATIONAL CONFERENCE ON
  ACOUSTICS, SPEECH, AND SIGNAL
  PROCESSING CONFERENCE PROCEEDINGS,
  ATLANTA, GA, USA, 7-10 M, pages 323-326 vol.
  1, XP002110436 1996, New York, NY, USA, IEEE,
  USA ISBN: 0-7803-3192-3**
- **HERMANSKY H: "AUTOMATIC SPEECH
  RECOGNITION AND HUMAN AUDITORY
  PERCEPTION" EUROPEAN CONFERENCE ON
  SPEECH TECHNOLOGY, EDINBURGH,
  SEPTEMBER 1987, vol. 1, no. CONF. 1, 1
  septembre 1987 (1987-09-01), pages 79-82,
  XP000010688 LAVER J;JACK M A**
- **COLE R A ET AL: "Experiments with a spoken
  dialogue system for taking the US census"
  SPEECH COMMUNICATION, vol. 23, no. 3, 1
  novembre 1997 (1997-11-01), page 243-260
  XP004112587 ISSN: 0167-6393**

**Description**

La présente invention concerne un procédé de reconnaissance vocale dans un signal acoustique bruité.

L'invention concerne également un système de reconnaissance vocale mettant en oeuvre de ce procédé.

L'invention concerne donc le traitement de signaux acoustiques contenant de la parole captée en milieux bruités. De ce fait, elle trouve une application principale, bien que non exclusive, dans le cadre des communications téléphoniques ou radiotéléphoniques, de la reconnaissance vocale, de la prise de son à bord d'aéronefs civils ou militaires, et de façon plus générale dans tous véhicules bruyants, d'intercommunications de bord, etc.

A titre d'exemple non limitatif, dans le cas d'un aéronef, les bruits résultent des moteurs, de la climatisation, de la ventilation des équipements de bord ou des bruits aérodynamiques. Tous ces bruits sont captés, au moins partiellement, par le microphone dans lequel parle le pilote ou un autre membre de l'équipage. En outre, pour ce type d'application en particulier, une des caractéristiques des bruits est d'être très variables dans le temps. En effet, ils sont très dépendants du régime de fonctionnement des moteurs (phase de décollage, régime stabilisé, etc..). Les signaux utiles, c'est-à-dire les signaux représentant les conversations, présentent également des particularités : ils sont le plus souvent de brève durée.

En traitement de la parole, il est usuel de considérer que les régimes stationnaires s'établissent sur des durées comprises entre 10 et 20 ms. Cet intervalle de temps est caractéristique des phénomènes élémentaires de la production de la parole et sera dénommé trame ci-après.

Dans ce qui suit, pour fixer les idées et sans en limiter en quoi que ce soit la portée, on se placera dans le cadre de l'application préférée de l'invention, à savoir la reconnaissance vocale dans l'habitacle d'un aéronef, sauf mention contraire.

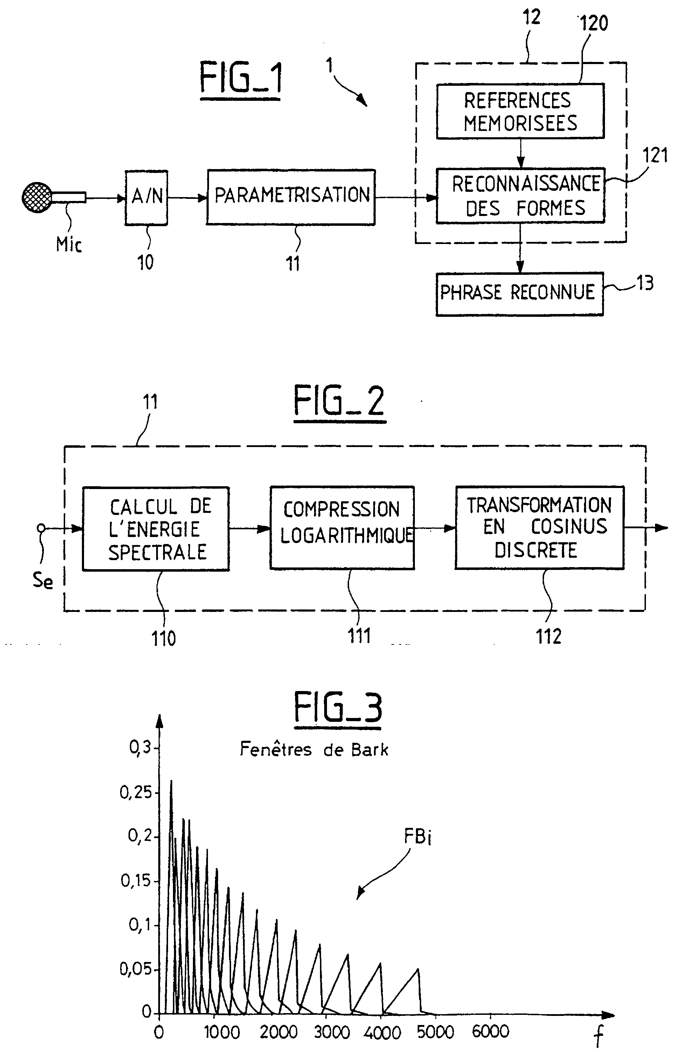

Dans l'art connu, la majorité des systèmes de reconnaissance vocale disponibles dans le commerce sont basés sur un procédé dit "global". Comme illustré schématiquement par la le bloc diagramme de la figure 1, placée en fin de la présente description, un tel système 1 comprend deux blocs fonctionnels principaux : un bloc de paramètrisation 11 d'un signal temporel reçu d'un transducteur électroacoustique, par exemple un microphone *Mic*, via des circuits de conversion analogique-numérique 10, et un bloc de classification de formes 12.

La paramètrisation transforme le signal temporel reçu des circuits de conversion analogique-numérique 10, à savoir une suite d'échantillons numériques en une suite de vecteurs de paramètres, chaque vecteur étant représentatif d'un segment temporel que l'on appelle trame, comme rappelé précédemment. L'intérêt de la paramètrisation est d'exprimer en un nombre réduit de valeurs le contenu acoustique du signal. Dans l'application considérée, une trame de 256 échantillons est représentée typiquement par un vecteur de 8 paramètres.

Le bloc de reconnaissance de formes comprend lui-même deux modules : un module de reconnaissance de formes proprement dit 121 et un module de mémorisation de références acoustiques 120. Le module 121 compare la série de vecteurs issue de la paramètrisation avec une série de vecteurs obtenus lors d'une phase d'apprentissage, phase pendant laquelle des empreintes acoustiques de chaque mot ou phonème sont déterminées. La comparaison permet d'établir une "distance" entre la phrase prononcée et les phrases de syntaxe. La phrase de syntaxe présentant la distance la plus faible représente *a priori* la phrase à reconnaître.

Les signaux numériques représentant la phrase reconnue sont transmis à un bloc d'utilisation 13.

Dans la majorité des applications visées par l'invention, et notamment l'application préférée, les signaux utiles, c'est-à-dire les signaux vocaux, sont plus ou moins entachés de bruit, puisque le microphone *Mic* capte des sons étrangers à la parole, comme il a été indiqué. Ce bruit constitue la principale source d'erreurs dans le processus de reconnaissance de la parole. En effet, le bruit masque une partie du signal acoustique, ce qui entraîne une perte de résolution de la reconnaissance. Ce phénomène est d'autant plus accentué que le niveau de bruit est fort. Dans certaines situations, le signal utile est complètement "noyé" dans le bruit.

Un autre problème se pose lorsque le niveau de bruit est très fortement variable d'un instant à l'autre. C'est le cas par exemple d'une automobile passant de l'état arrêté à l'état de marche, ou encore d'un aéronef passant d'un régime de décollage à un régime de croisière. Le traitement du bruit doit être performant dans les deux conditions d'ambiance sonore.

L'expérience montre en outre que le problème se pose avec plus d'acuité encore lorsque les variations de niveaux de bruit sont très rapides.

Dans l'art connu, on a cherché à combattre les effets parasites du bruit. Pour ce faire, on applique, préalablement à la reconnaissance vocale, des traitements de débruitage, c'est-à-dire des traitements visant à minimiser les effets du bruit. Toutefois, ces traitements ne permettent que de limiter la dégradation du taux de reconnaissance causée par le bruit. Pour des niveaux de bruits élevés, ils ne permettent pas de maintenir un degré de performances suffisant.

Dans tous les cas, le signal, après les opérations de débruitage, reste entaché d'un niveau de bruit dit résiduel. Bien qu'étant plus faible que le niveau initial, ce niveau de bruit résiduel demeure, dans la majorité des cas, non négligeable et perturbe fortement le processus de reconnaissance vocale. Cette méthode, à elle seule, n'est donc pas suffisante pour éliminer les nuisances.

Une chaîne de paramétrisation dite cepstrale, répertoriée sous le terme « MFCC » (pour Mel Frequency Cepstrum Cofficients), est couramment utilisée dans des applications de reconnaissance vocale. Elle est décrite par exemple dans le brevet US-A-5 696 878 et dans l'article de VERGIN R et al : « Compensated mel frequency cepstrum coefficients », PROCEEDINGS OF ICASSP1996, ATLANTA, GA, USA, 7-10 M, pages 323-326 vol. 1, XP002110436 1996, New York, NY, USA, IEEE, USA ISBN :0-7803-3192-3. Mais cette chaîne de paramètrisation manque de robustesse en présence de bruit.

Aussi, il a été proposé une solution complémentaire consistant à rendre la chaîne de paramètrisation plus robuste, c'est-à-dire la moins affectée possible par le bruit. Cette caractéristique est associée aux chaînes de paramétrisation restituant les phénomènes les plus énergétiques du signal de parole. En effet, plus une composante est énergétique, moins elle est vulnérable au bruit.

Cependant, là encore, ce procédé n'est pas exempt d'inconvénients. Il entraîne automatiquement, en contrepartie de la robustesse obtenue, une perte de sensibilité. En l'absence de bruit, une chaîne de paramètrisation robuste est naturellement moins performante qu'une chaîne de paramètrisation sensible.

L'invention se fixe pour but un procédé permettant, tout à la fois, de conserver à une chaîne de paramètrisation une grande sensibilité lorsque le niveau du bruit ambiant est faible, voire quasi-inexistant, et de la rendre robuste en présence d'un niveau de bruit important.

Pour ce faire, le procédé selon l'invention adapte, en temps réel, le degré de robustesse de la chaîne de paramètrisation, de façon à obtenir, à tout instant, le meilleur compromis possible entre robustesse et sensibilité, quel que soit le niveau de bruit.

L'invention a donc pour objet un procédé de reconnaissance vocale dans un signal acoustique bruité, le procédé comprenant au moins une phase de numérisation et de découpage dudit signal acoustique sous forme d'une suite de trames temporelles de durée prédéterminée, une phase de paramètrisation desdites trames temporelles de manière à les transformer en une première série de vecteurs de paramètres dans le domaine fréquentiel et une phase de comparaison desdits vecteurs de paramètres de la première série avec des vecteurs de paramètres d'une seconde série, pré-enregistrés dans une phase préliminaire dite d'apprentissage, de manière à obtenir ladite reconnaissance par détermination d'une distance minimale entre les vecteurs de la première série et des vecteurs particuliers de la seconde série, caractérisé en ce que la dite phase de paramètrisation comprend les étapes suivantes :

- le calcul de l'énergie spectrale desdites trames par élévation au carré et l'application d'une suite consécutive de fenêtres de pondération associée chacune à un coefficient de pondération déterminé, reproduisant la forme de filtres caractérisant le système auditif humain, de manière à créer des canaux fréquentiels ;

- une compression logarithmique des valeurs énergétiques des signaux présents dans lesdits canaux fréquentiels ;

- la génération de ladite suite de vecteurs de paramètres dans le domaine fréquentiel;

- et en ce qu'il comprend une étape consistant en l'ajout d'une valeur prédéterminée, dite de décalage, auxdits coefficients de pondération déterminés, de manière à modifier ladite paramètrisation et à rendre ladite reconnaissance vocale plus robuste en présence de bruit.

L'invention a encore pour objet un système de reconnaissance vocale pour la mise en oeuvre de ce procédé.

L'invention sera mieux comprise et d'autres caractéristiques et avantages apparaîtront à la lecture de la description qui suit en référence aux figures annexées, parmi lesquelles :

- la figure 1 illustre schématiquement, sous forme de bloc diagramme, un système de reconnaissance vocale de l'art connu, fonctionnant selon un procédé dit global ;

- la figure 2 illustre, de façon plus détaillée, un bloc de paramètrisation, composante du système selon la figure 1 ;

- la figure 3 est un diagramme illustrant la cofiguration de fenêtres dites de Bark ;

- la figure 4 est un diagramme illustrant la forme de courbes représentant des fonctions de type Qlog ;

- la figure 5 illustre une chaîne de paramètrisation pour la mise en oeuvre du procédé de reconnaissance vocale selon un premier mode de réalisation de l'invention ;

- la figure 6 illustre un système complet mettant en oeuvre le procédé de reconnaissance vocale selon un mode de réalisation préféré de l'invention ;

- la figure 7 représente un exemple typique de signal acoustique issu d'une prise de son bruitée ;

- et la figure 8 est un organigramme représentant les étapes d'un procédé particulier de recherche d'un modèle de bruit.

Avant de décrire de façon détaillée un système de reconnaissance vocale permettant la mise en oeuvre du procédé selon l'invention, il est utile de détailler les composantes principales de circuits de paramètrisation : bloc 11 de la figure 1.

Pour fixer les idées, sans limiter en quoi que ce soit la portée de l'invention, on va décrire un exemple de chaîne de paramètrisation cepstrale classique connue sous le sigle "MFCC" (pour "Mel Frequency Cepstral Coefficient"). Ce type de chaîne de paramètrisation est couramment utilisé dans les applications de reconnaissance vocale.

La figure 2 illustre un tel bloc de paramètrisation 11. Celui-ci comprend trois modules fonctionnels, 110 à 112.

Le premier module, 110, permet de déterminer l'énergie spectrale. Les signaux d'entrées Se sont constitués de trames numériques générées par les circuits 10 (figure 1). Le spectre de chaque trame temporelle est élevé au carré. On applique ensuite aux valeurs numériques obtenues des fenêtres de pondération, préférentiellement seize fenêtres dites de Bark, reproduisant la forme des filtres du système auditif humain, de façon à obtenir seize valeurs d'énergies, dans des canaux fréquentiels.

La figure 3 est un diagramme illustrant la forme des seize fenêtres de Bark appliquées, $FB_i$, avec $1 \leq i \leq 16$. En ordonnée, on a représenté l'amplitude des coefficients de pondération et en abscisse la fréquence (en Hz). Les premières fenêtres présentent un pic de forte amplitude et une bande passante étroite, alors que l'amplitude des fenêtres de rang plus élevé décroît et la bande passante s'élargit. Les fenêtres de Bark $FB_i$ présentent des recouvrement deux à deux. Les caractéristiques exactes de ces fenêtres de Bark sont bien connues dans l'état de l'art et il est inutile de les décrire plus avant. Pour plus de détails, on pourra se référer avec profit au livre : "La parole et son traitement automatique", Calliope, Edition MASSON, 1989, plus particulièrement à la page 268 de ce livre.

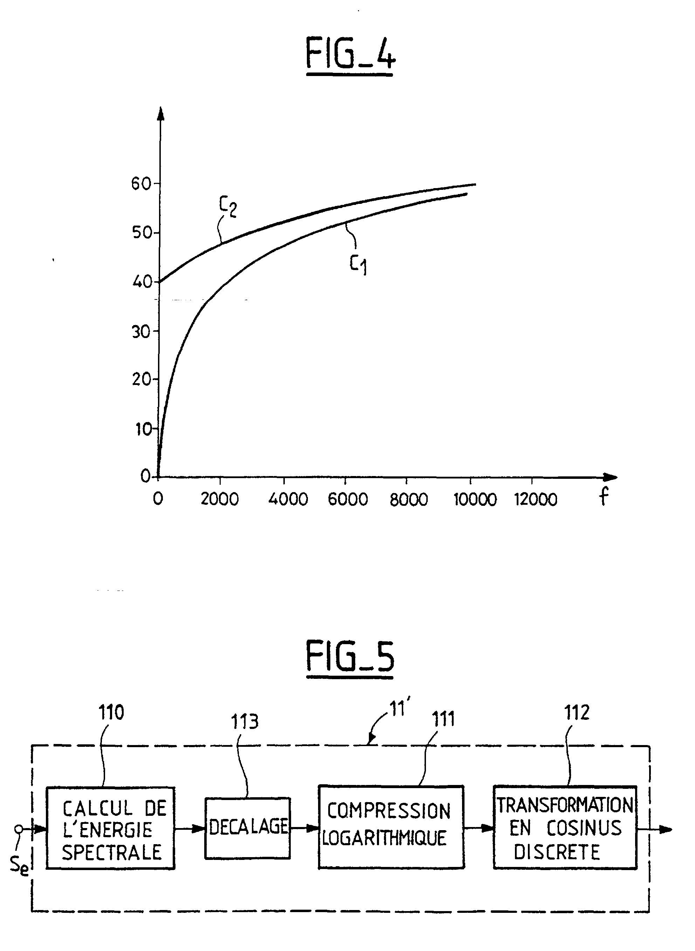

Les seize valeurs obtenues sont ensuite transmises sous forme de signaux numériques à des circuits de compression logarithmique 111. De façon plus précise, la fonction de compression est une fonction Qlog. On obtient, grâce à cette fonction une approximation d'un comportement logarithmique. Une telle fonction est représentée sur le diagramme de la figure 4, par la courbe référencée $C_1$. Contrairement à une fonction logarithme pure qui tend vers moins l'infini à l'origine, la fonction Qlog prend la valeur zéro à l'origine. La fonction Qlog a un comportement logarithmique pour des valeurs d'abscisse supérieures à zéro.

Les signaux numériques compressés sont ensuite transmis au module 112 qui effectue une transformée en cosinus discrète. On sélectionne ensuite les coefficients 2 à 9 de cette transformée. Ces coefficients constituent le vecteur paramètre recherché qui est présenté au bloc de reconnaissance de forme (figure 1 : 12).

On va maintenant montrer que cette chaîne de paramètrisation manque de robustesse en présence de bruit. Pour mesurer l'impact du bruit, on va étudier la distance $d$ entre deux vecteurs représentatifs d'un même segment de parole, avec, dans un cas, un bruit présent dans une trame que l'on référence $l$ et, dans l'autre cas, pas de bruit : trame que l'on référence $m$. La distance $d$ est donnée par la relation suivante :

$$ d = \sum_{j=1.8} \left| c_{m,j} - c_{l,j} \right| \qquad (1), $$

avec $C_{m,j}$ et $C_{l,j}$ les $j^{\text{ème}}$ coefficients cepstraux des trames $m$ et $l$, respectivement.

On suppose que les signaux de bruit et de parole sont indépendants, d'où la relation suivante :

$$ B_{l,i} = B_{m,i} + B_{n,i} \qquad (2), $$

relation dans laquelle $B_{l,i}$, $B_{m,i}$ et $B_{n,i}$ sont les $i^{\text{ème}}$ coefficients de Bark de la trame bruitée $m$, de la trame non bruitée $l$ et du bruit pur, respectivement.

Compte tenu des opérations de compression logarithmique et de transformée en cosinus discrète, cette dernière étant une transformation linéaire, on peut montrer que la distance $d$ entre deux trames est une fonction croissante en Qlog des rapports entre coefficients de Bark. Il en ressort que les relations suivantes sont vérifiées :

$$d = f\left(\left(Q \ \log\left(\frac{B_{1,i}}{B_{m.i}}\right)\right)\right) pour \ i = 1..16 \qquad (3),$$

et

$$d = f\left(\left(Q \ \log\left(1 + \frac{B_{n,i}}{B_{m,i}}\right)\right)\right) pour \ i = 1..16 \qquad (3bis).$$

Il en ressort que, si le rapport $(B_{n,i}/B_{m,i})$ est grand, c'est-à-dire si le bruit est beaucoup plus fort que le signal utile, la distance entre les deux trames est importante, ce qui indique un manque de robustesse puisque les deux trames ont le même contenu. Cette éventualité est d'autant plus importante que le coefficient Bark $B_{m,i}$ est faible. La distorsion entre deux trames est causée principalement par les coefficients Bark les moins énergétiques, c'est à dire ceux qui portent le moins d'information acoustique.

Selon une première caractéristique importante du procédé selon l'invention, on procède à l'ajout d'une valeur de décalage $K_i$, ou "offset" selon la terminologie anglo-saxonne, à l'ensemble des coefficients de Bark $B_i$.

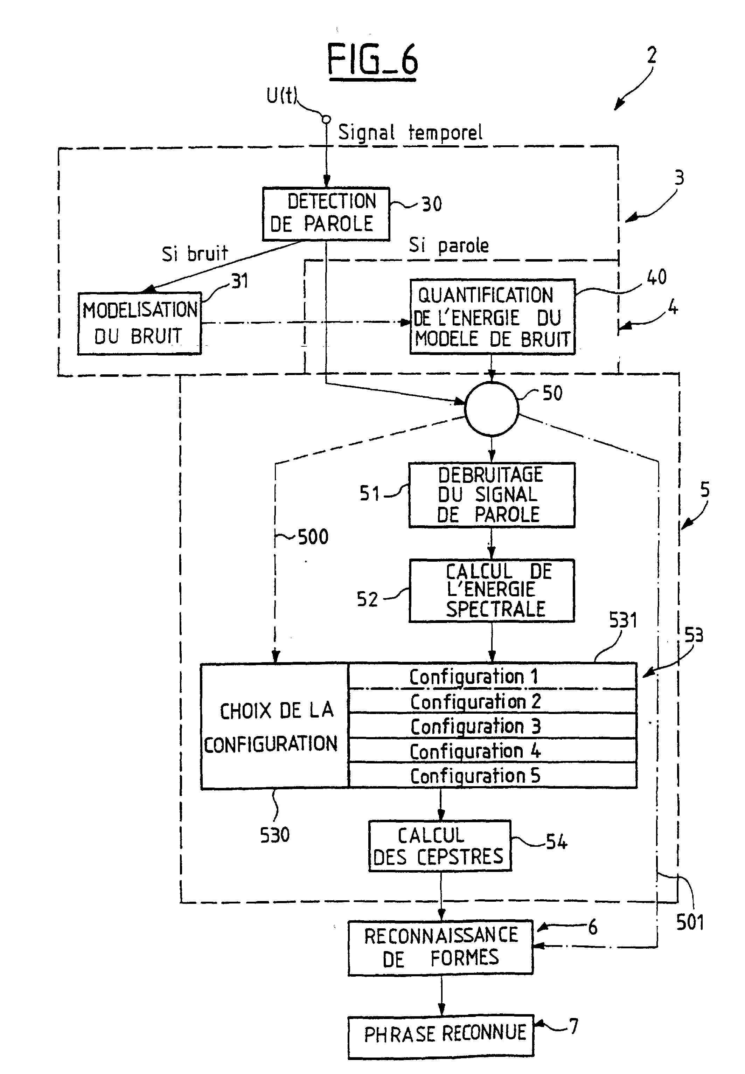

La chaîne de paramètrisation modifiée selon le procédé de l'invention, désormais référencée 11', est illustrée par la figure 5. Les circuits 110, 111 et 112 sont strictement identiques, quant aux fonctions remplies, aux circuits de même référence de la figure 2, et il est inutile de les redécrire. Dans le mode de réalisation illustré par la figure 5, on intercale un circuit supplémentaire 113 entre les circuits 110 et 111. Ce circuit a pour fonction d'appliquer l'offset précité aux seize coefficients de Bark.

La relation (3bis) devient alors :

$$d = f\left(\left(Q \ \log\left(1 + \frac{B_{n,i}}{K_i + B_{m,i}}\right)\right)\right) pour \ i = 1..16 \qquad (4)$$

La relation (4) montre que la distance d est une fonction croissante des rapports $(B_{n,i}/(K_i + B_{m,i}))$. En d'autres termes, si $(B_{m,i})$ est faible, alors l'offset $K_i$ compense sa faiblesse et interdit au rapport de prendre des valeurs trop grandes, ce qui entraînerait une distance $d$ trop importante entre les deux trames. On constate donc également que, plus l'offset est grand, plus le système devient robuste, puisque insensible, ou pour le moins très peu sensible, aux variations des coefficients de Bark de faible énergie.

Cependant, si le coefficient d'offset est constant, il demeure un inconvénient résiduel. En effet la sensibilité diminue et les variations significatives liées à des différences de contenu des trames peuvent ne pas être prises en compte.

On va se reporter de nouveau au diagramme de la figure 4. On a représenté sur ce diagramme la courbe Qlog modifiée du fait de l'application de l'offset $K_i$ précité. On suppose, à titre d'exemple, que l'on choisit $K_i$ égal à 2000. On constate que la pente initiale de la courbe Qlog modifiée $C_2$, pour cette valeur de $K_i$, passe à l'origine par l'ordonnée 40 et présente une pente plus faible que la courbe Qlog $C_1$ non modifiée, ce qui traduit une moindre sensibilité aux variations des coefficients de Bark de faibles niveaux.

Dans un mode de réalisation préféré du procédé de l'invention, on va encore améliorer les résultats obtenus, en rendant la robustesse adaptative, en temps réel, au niveau de bruit ambiant.

On appelle, dans ce qui suit, "configuration des offsets" l'ensemble des valeurs des seize offsets que l'on additionne aux seize coefficients de Bark. Cette configuration d'offset détermine la robustesse de la chaîne de paramètrisation. En effet, plus les valeurs des offsets sont importantes, plus la paramètrisation est robuste, mais, en contrepartie, moins sa résolution est fine. Il s'ensuit que l'obtention d'un compromis optimal entre robustesse et sensibilité est directement déterminée par la configuration d'offset. L'invention tire partie de cette observation.

Les seize valeurs d'offset étant indépendantes, il est donc possible de choisir des valeurs distinctes pour les seize canaux fréquentiels de type Bark. Le choix des valeurs d'offset va être déterminé par deux facteurs principaux.

En premier lieu, on considère le spectre moyen de la parole humaine. Ce spectre présente naturellement une énergie beaucoup plus forte en basses et moyennes fréquences qu'en hautes fréquences.

En deuxième lieu, on considère la répartition spectrale du bruit. Comme il a été indiqué, la robustesse doit être plus importante pour les canaux présentant le niveau de bruit le plus élevé. A titre d'exemple, dans l'application préférée, c'est-à-dire la reconnaissance vocale dans les aéronefs de type militaire, le bruit capté par le masque à oxygène du pilote présente typiquement un pic à 2 kHz. Il est donc avantageux que l'offset correspondant à cette valeur de fréquence soit élevé.

On va maintenant décrire un système complet de reconnaissance vocale mettant en oeuvre le procédé selon un mode de réalisation préféré de l'invention, par référence au bloc diagramme de la figure 6.

Le système de reconnaissance vocale, désormais référencé 2, reçoit en entrée un signal temporel *U(t)*. Ce signal peut être constitué par un signal utile pur, c'est-à-dire de la parole non entachée de bruit, un signal acoustique plus ou moins noyé dans du bruit, ou un signal de bruit uniquement.

Il est donc tout d'abord nécessaire de déterminer, dans une phase préliminaire, les caractéristiques du bruit au moment de l'élocution. Ce traitement préliminaire est effectué par un bloc référencé 3.

Un premier module, 30, discrimine dans le signal temporel entrant *U(t)*, le signal de parole et le signal de bruit. Les segments de bruit sont isolés et transmis à un module de modélisation 31 du bruit. La détection de la parole est un traitement de signal classique et bien connu. Différentes méthodes ont été proposées.

Le traitement préliminaire rappelé succinctement ci-dessus peut être d'un type connu. Notamment, l'élaboration d'un modèle de bruit d'un signal bruité est une opération classique en soi. Cependant, la méthode mise en oeuvre pour cette opération peut être une méthode de l'art connu, mais aussi une méthode originale.

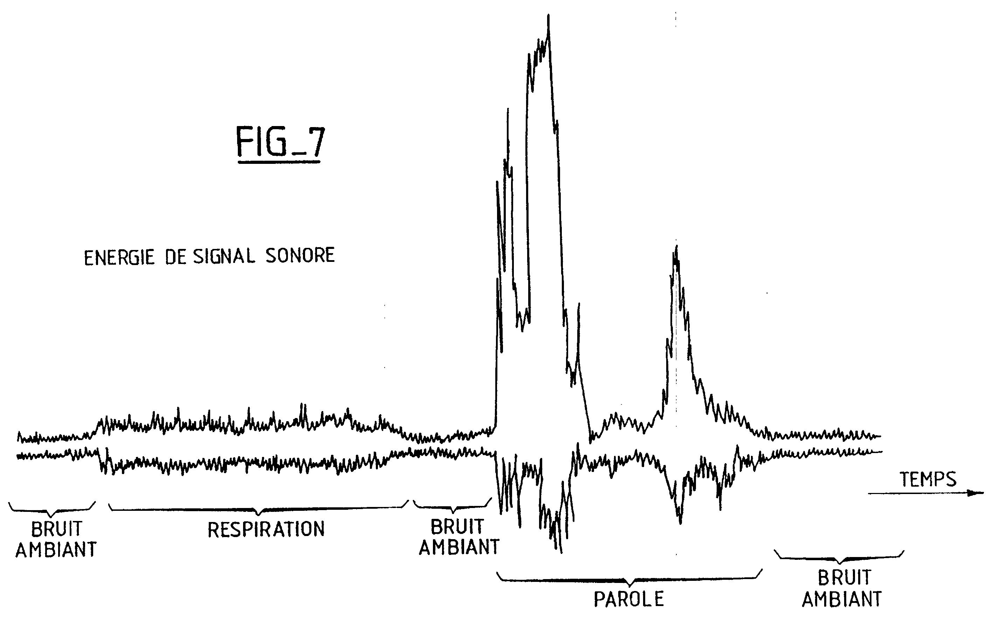

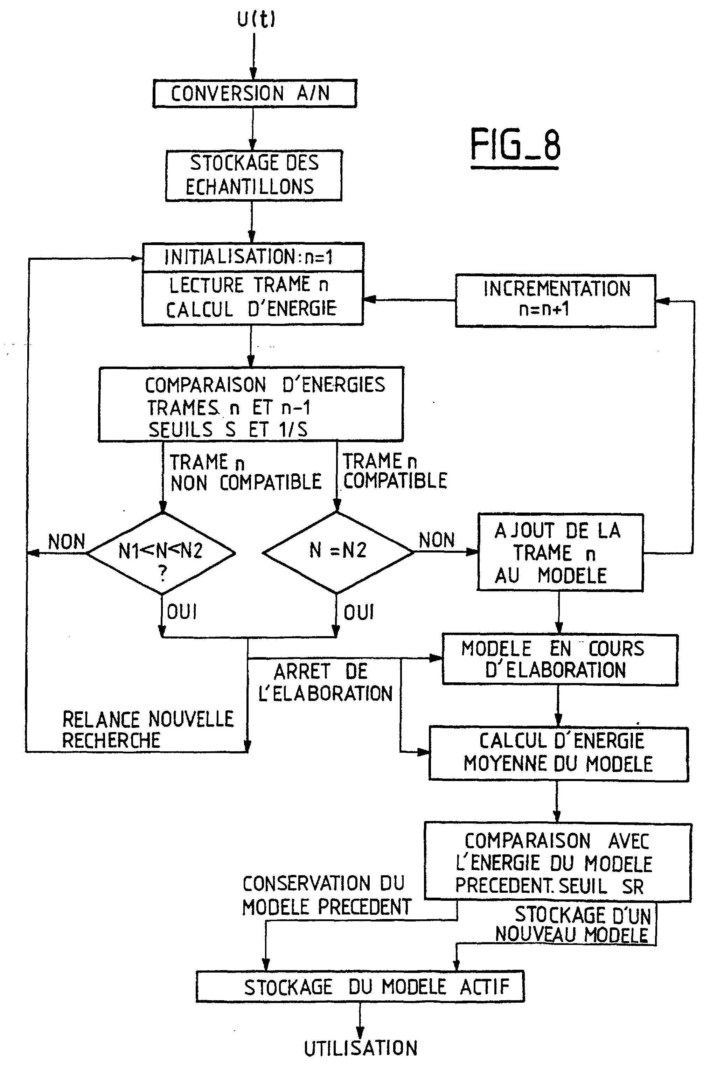

On va décrire ci-après, par référence aux figures 7 et 8, une méthode d'élaboration d'un modèle de bruit, particulièrement adaptée aux applications principales visées par le procédé de l'invention.

Cette méthode repose sur une recherche permanente et automatique d'un modèle de bruit. La recherche est effectuée sur les échantillons du signal *U(t)*, numérisés et stockés dans une mémoire tampon d'entrée (non représentée). Cette mémoire est capable de mémoriser simultanément tous les échantillons de plusieurs trames du signal d'entrée (au moins deux trames et, dans le cas général, *N* trames).

Le modèle de bruit recherché est constitué par une succession de plusieurs trames dont la stabilité en énergie et le niveau d'énergie relative font penser qu'il s'agit d'un bruit ambiant et non d'un signal de parole ou d'un autre bruit perturbateur. On verra plus loin comment se fait cette recherche automatique.

Lorsqu'un modèle de bruit est trouvé, tous les échantillons des *N* trames successives représentant ce modèle de bruit sont conservés en mémoire, de sorte que le spectre de ce bruit peut être analysé et peut servir à un débruitage. Mais la recherche automatique de bruit continue à partir du signal temporel d'entrée *U(t)* pour trouver éventuellement un modèle plus récent et plus adapté, soit parce qu'il représente mieux le bruit ambiant, soit parce que le bruit ambiant a évolué. Le modèle de bruit plus récent est mis en mémoire à la place du précédent, si la comparaison avec le précédent montre qu'il est plus représentatif du bruit ambiant.

Les postulats de départ pour l'élaboration automatique d'un modèle de bruit sont les suivants :

- le bruit qu'on veut éliminer est le bruit de fond ambiant,

- le bruit ambiant a une énergie relativement stable à court terme,

- la parole est le plus souvent précédée d'un bruit de respiration du pilote qu'il ne faut pas confondre avec le bruit ambiant ; mais ce bruit de respiration s'éteint quelques centaines de millisecondes avant la première émission de parole proprement dite, de sorte qu'on ne retrouve que le bruit ambiant juste avant l'émission de parole,

- et, enfin, les bruits et la parole se superposent en termes d'énergie de signal, de sorte qu'un signal contenant de la parole ou un bruit perturbateur, y compris la respiration dans le microphone, contient forcément plus d'énergie qu'un signal de bruit ambiant.

Il en résulte qu'on fera l'hypothèse simple suivante : le bruit ambiant est un signal présentant une énergie minimale stable à court terme. Par court terme, il faut entendre quelques trames, et on verra dans l'exemple pratique donné ci-après que le nombre de trames destiné à évaluer la stabilité du bruit est de 5 à 20. L'énergie doit être stable sur plusieurs trames, faute de quoi on doit supposer que le signal contient plutôt de la parole ou un bruit autre que le bruit ambiant. Elle doit être minimale, faute de quoi on considère que le signal contient de la respiration ou des éléments phonétiques de parole ressemblant à du bruit mais se superposant au bruit ambiant.

La figure 7 représente une configuration typique d'évolution temporelle de l'énergie d'un signal microphonique au moment d'un début d'émission de parole, avec une phase de bruit de respiration, qui s'éteint pendant quelques dizaines à centaines de millisecondes pour faire place au bruit ambiant seul, après quoi un niveau d'énergie élevé indique la présence de parole, pour revenir enfin au bruit ambiant.

La recherche automatique du bruit ambiant consiste alors à trouver au moins *N1* trames successives (par exemple *N1* = 5) dont les énergies sont proches les unes des autres, c'est-à-dire que le rapport entre l'énergie de signal contenue dans une trame et l'énergie de signal contenue dans la ou, de préférence, les trames précédentes est situé à l'intérieur d'une gamme de valeurs déterminée (par exemple compris entre 1/3 et 3). Lorsqu'une telle succession de trames d'énergie relativement stable a été trouvée, on stocke les valeurs numériques de tous les échantillons de ces *N* trames. Cet ensemble de *NxP* échantillons constitue le modèle courant de bruit. Il est utilisé dans le débruitage. L'analyse des trames suivantes continue. Si on trouve une autre succession d'au moins *N1* trames successives répondant aux mêmes conditions de stabilité d'énergie (rapports d'énergies de trames dans une gamme déterminée), on compare alors l'énergie moyenne de cette nouvelle succession de trames à l'énergie moyenne du modèle stocké, et on remplace ce dernier par la nouvelle succession si le rapport entre l'énergie moyenne de la nouvelle succession et l'énergie moyenne du modèle stocké est inférieur à un seuil de remplacement déterminé qui peut être de 1,5 par exemple.

De ce remplacement d'un modèle de bruit par un modèle plus récent moins énergétique ou pas beaucoup plus énergétique, il résulte que le modèle de bruit se cale globalement sur le bruit ambiant permanent. Même avant une prise de parole, précédée d'une respiration, il existe une phase où le bruit ambiant seul est présent pendant une durée suffisante pour pouvoir être pris en compte comme modèle de bruit actif. Cette phase de bruit ambiant seul, après respiration, est brève. Le nombre *N1* est choisi relativement faible, afin qu'on ait le temps de recaler le modèle de bruit sur le bruit ambiant après la phase de respiration.

Si le bruit ambiant évolue lentement, l'évolution sera prise en compte du fait que le seuil de comparaison avec le modèle stocké est supérieur à 1. S'il évolue plus rapidement dans le sens croissant, l'évolution risque de ne pas être prise en compte, de sorte qu'il est préférable de prévoir de temps en temps une ré-initialisation de la recherche d'un modèle de bruit. Par exemple, dans un aéronef au sol à l'arrêt, le bruit ambiant est relativement faible, et il ne faudrait pas qu'au cours de la phase de décollage le modèle de bruit reste figé sur ce qu'il était à l'arrêt, du fait qu'un modèle de bruit n'est remplacé que par un modèle moins énergétique ou pas beaucoup plus énergétique. On expliquera plus loin les méthodes de ré-initialisation envisagées.

La figure 8 représente un organigramme des opérations de recherche automatique d'un modèle de bruit ambiant.

Le signal d'entrée $U(t)$, échantillonné à la fréquence $F_e = 1/T_e$ et numérisé par un convertisseur analogique-numérique, est stocké dans une mémoire tampon capable de stocker tous les échantillons d'au moins 2 trames.

Le numéro de la trame courante dans une opération de recherche d'un modèle de bruit est désigné par *n* et est compté par un compteur au fur et à mesure de la recherche. A l'initialisation de la recherche, *n* est mis à 1. Ce numéro *n* sera incrémenté au fur et à mesure de l'élaboration d'un modèle de plusieurs trames successives. Lorsqu'on analyse la trame courante *n*, le modèle comprend déjà par hypothèse *n*-1 trames successives répondant aux conditions imposées pour faire partie d'un modèle.

On considère d'abord qu'il s'agit d'une première élaboration de modèle, aucun autre modèle précédant n'ayant été construit. On verra ensuite ce qui se passe pour des élaborations ultérieures.

L'énergie de signal de la trame est calculée par sommation des carrés des valeurs numériques des échantillons de la trame. Elle est conservée en mémoire.

On lit ensuite la trame suivante de rang *n* = 2, et son énergie est calculée de la même manière. Elle est également conservée en mémoire.

On calcule le rapport entre les énergies des deux trames. Si ce rapport est compris entre deux seuils *S* et *S'* dont l'un est supérieur à 1 et l'autre est inférieur à 1, on considère que les énergies des deux trames sont proches et que les deux trames peuvent faire partie d'un modèle de bruit. Les seuils *S* et *S'* sont de préférence inverses l'un de l'autre (*S'* = 1/*S*) de sorte qu'il suffit de définir l'un pour avoir l'autre. Par exemple, une valeur typique est *S* = 3, *S'* = 1/3. Si les trames peuvent faire partie d'un même modèle de bruit, les échantillons qui les composent sont stockés pour commencer à construire le modèle, et la recherche continue par itération en incrémentant *n* d'une unité.

Si le rapport entre les énergies des deux premières trames sort de l'intervalle imposé, les trames sont déclarées incompatibles et la recherche est réinitialisée en remettant *n* à 1.

Dans le cas où la recherche continue, on incrémente le rang n de la trame courante, et on effectue, dans une boucle de procédure itérative, un calcul d'énergie de la trame suivante et une comparaison avec l'énergie de la trame précédente ou des trames précédentes, en utilisant les seuils *S* et *S'*.

On notera à ce propos que deux types de comparaison sont possibles pour ajouter une trame à *n*-1 trames précédentes qui ont déjà été considérées comme homogènes en énergie : le premier type de comparaison consiste à comparer uniquement l'énergie de la trame *n* à l'énergie de la trame *n*-1. Le deuxième type consiste à comparer l'énergie de la trame n à chacune des trames 1 à *n*-1. La deuxième manière aboutit à une plus grande homogénéité du modèle mais elle a l'inconvénient de ne pas prendre en compte suffisamment bien les cas où le niveau de bruit croît ou décroît rapidement.

Ainsi, l'énergie de la trame de rang *n* est comparée avec l'énergie de la trame de rang *n*-1 et éventuellement d'autres trames précédentes (pas forcément toutes d'ailleurs).

Si la comparaison indique qu'il n'y a pas homogénéité avec les trames précédentes, du fait que le rapport des énergies n'est pas compris entre $1/S$ et $S$, deux cas sont possibles :

- ou bien $n$ est inférieur ou égal à un nombre minimal $N1$ en dessous duquel le modèle ne peut pas être considéré comme significatif du bruit ambiant parce que la durée d'homogénéité est trop courte; par exemple $N1$ = 5 ; dans ce cas on abandonne le modèle en cours d'élaboration, et on réinitialise la recherche au début en remettant $n$ à 1 ;
- ou bien $n$ est supérieur au nombre minimal $N1$. Dans ce cas, puisqu'on trouve maintenant un manque d'homogénéité, on considère qu'il y a peut-être un début de parole après une phase de bruit homogène, et on conserve à titre de modèle de bruit tous les échantillons des $n$-1 trames de bruit homogènes qui ont précédé le manque d'homogénéité. Ce modèle reste stocké jusqu'à ce qu'on trouve un modèle plus récent qui semble également représenter du bruit ambiant. La recherche est réinitialisée de toute façon en remettant $n$ à 1.

Mais la comparaison de la trame $n$ avec les précédentes aurait pu encore aboutir à la constatation d'une trame encore homogène en énergie avec la ou les précédentes. Dans ce cas, ou bien $n$ est inférieur à un deuxième nombre $N2$ (par exemple $N2$ = 20) qui représente la longueur maximale souhaitée pour le modèle de bruit, ou bien $n$ est devenu égal à ce nombre $N2$. Le nombre $N2$ est choisi de manière à limiter le temps de calcul dans les opérations ultérieures d'estimation de densité spectrale de bruit.

Si $n$ est inférieur à $N2$, la trame homogène est ajoutée aux précédentes pour contribuer à construire le modèle de bruit, $n$ est incrémenté et la trame suivante est analysée.

Si $n$ est égal à $N2$, la trame est également ajoutée aux $n$-1 trames homogènes précédentes et le modèle de $n$ trames homogènes est stocké pour servir dans l'élimination du bruit. La recherche d'un modèle est par ailleurs réinitialisée en remettant $n$ à 1.

Les étapes précédentes concernent la première recherche de modèle. Mais une fois qu'un modèle a été stocké, il peut à tout moment être remplacé par un modèle plus récent.

La condition de remplacement est encore une condition d'énergie, mais cette fois elle porte sur l'énergie moyenne du modèle et non plus sur l'énergie de chaque trame.

Par conséquent, si un modèle possible vient d'être trouvé, avec $N$ trames où $N1 < N < N2$, on calcule l'énergie moyenne de ce modèle qui est la somme des énergies des $N$ trames, divisée par $N$, et on la compare à l'énergie moyenne des $N'$ trames du modèle précédemment stocké.

Si le rapport entre l'énergie moyenne du nouveau modèle possible et l'énergie moyenne du modèle actuel en vigueur est inférieur à un seuil de remplacement $SR$, le nouveau modèle est considéré comme meilleur et on le stocke à la place du précédent. Sinon, le nouveau modèle est rejeté et l'ancien reste en vigueur.

Le seuil $SR$ est de préférence légèrement supérieur à 1.

Si le seuil $SR$ était inférieur ou égal à 1, on stockerait à chaque fois les trames homogènes les moins énergétiques, ce qui correspond bien au fait qu'on considère que le bruit ambiant est le niveau d'énergie au-dessous duquel on ne descend jamais. Mais, on éliminerait toute possibilité d'évolution du modèle si le bruit ambiant se mettait à augmenter.

Si le seuil $SR$ était trop élevé au-dessus de 1, on risquerait de mal distinguer le bruit ambiant et d'autres bruits perturbateurs (respiration), voire même certains phonèmes qui ressemblent à du bruit (consonnes sifflantes ou chuintantes par exemple). L'élimination de bruit à partir d'un modèle de bruit calé sur la respiration ou sur des consonnes sifflantes ou chuintantes risquerait alors de nuire à l'intelligibilité du signal débruité.

Dans un exemple préféré le seuil $SR$ est d'environ 1,5. Au-dessus de ce seuil on conservera l'ancien modèle ; en dessous de ce seuil on remplacera l'ancien modèle par le nouveau. Dans les deux cas, on ré-initialisera la recherche en recommençant la lecture d'une première trame du signal d'entrée $U(t)$, et en mettant $n$ à 1.

Pour rendre l'élaboration du modèle de bruit plus fiable, on peut prévoir que la recherche d'un modèle est inhibée si une émission de parole est détectée dans le signal utile. Les traitements numériques de signal couramment utilisés en détection de parole permettent d'identifier la présence de paroles en se fondant sur les spectres caractéristiques de périodicité de certains phonèmes, notamment les phonèmes correspondant à des voyelles ou à des consonnes voisées.

Le but de cette inhibition est d'éviter que certains sons soient pris pour du bruit, alors que ce sont des phonèmes utiles, qu'un modèle de bruit fondé sur ces sons soit stocké et que la suppression du bruit postérieure à l'élaboration du modèle tende alors à supprimer tous les sons similaires.

Par ailleurs, il est souhaitable de prévoir de temps en temps une ré-initialisation de la recherche du modèle pour permettre une remise à jour du modèle alors que les augmentations du bruit ambiant n'ont pas été prises en compte du fait que $SR$ n'est pas beaucoup supérieur à 1.

Le bruit ambiant peut en effet augmenter de façon importante et rapide, par exemple pendant la phase d'accélération des moteurs d'un avion ou d'un autre véhicule, aérien, terrestre ou maritime. Mais le seuil $SR$ impose que le modèle de bruit précédent soit conservé lorsque l'énergie moyenne de bruit augmente trop vite.

Si on souhaite remédier à cette situation, on peut procéder de différentes manières, mais la manière la plus simple est de ré-initialiser le modèle périodiquement en recherchant un nouveau modèle et en l'imposant comme modèle actif indépendamment de la comparaison entre ce modèle et le modèle précédemment stocké. La périodicité peut être basée sur la durée moyenne d'élocution dans l'application envisagée ; par exemple les durées d'élocution sont en moyenne de quelques secondes pour l'équipage d'un avion, et la ré-initialisation peut avoir lieu avec une périodicité de quelques secondes.

La mise en oeuvre de la méthode d'élaboration d'un modèle de bruit (figure 6 : module 31) peut se faire à partir de calculateurs non spécialisés, pourvus de programmes de calcul nécessaires et recevant les échantillons de signaux numérisés tels qu'ils sont fournis par un convertisseur analogique-numérique, via un port adapté.

Cette mise en oeuvre peut aussi se faire à partir d'un calculateur spécialisé à base de processeurs de signaux numériques, ce qui permet de traiter plus rapidement un plus grand nombre de signaux numériques.

Les calculateurs sont associés, comme il est bien connu, à différents types de mémoires, statiques et dynamique, pour enregistrer les programmes et les données intermédiaires, ainsi qu'à des mémoires circulantes de type "FIFO".

On va maintenant décrire les phases de traitement plus spécifiques au procédé selon l'invention.

L'énergie du bruit avant l'élocution traduit l'environnement sonore dans lequel la reconnaissance vocale évolue. Cette valeur permet donc de définir l'exigence de robustesse nécessaire au fonctionnement nominal de la reconnaissance vocale. Pour obtenir une adaptation optimale de la reconnaissance vocale en fonction du niveau de bruit, le procédé selon l'invention introduit une dépendance entre l'énergie du bruit mesurée et la chaîne de paramètrisation.

Cette opération comporte deux étapes principales.

La première étape, réalisée dans le module unique 40 du bloc 4, consiste à quantifier l'énergie du bruit. Ce module reçoit directement les signaux de parole et les signaux de bruits issus du module de modélisation de bruit 31.

Pour réaliser la quantification précitée, on détermine l'énergie du bruit et on la compare à une série pré-définie de valeurs de l'énergie. Comme il est connu, l'énergie d'un signal peut être obtenu simplement en effectuant la moyenne quadratique d'échantillons. Chaque intervalle, borné par une valeur maximale et une valeur minimale d'énergie du bruit, va correspondre à un niveau de robustesse prédéterminé. En d'autres termes, pour toutes les valeurs d'énergie du bruit à l'intérieur d'un même intervalle, la chaîne de paramètrisation est constante. Naturellement les différents intervalles sont contigus.

La détermination des plages de fonctionnement est effectuée, *a priori*, une fois pour toutes, lors d'une phase préliminaire, en fonction de l'application précise envisagée.

Pour fixer les idées, et à titre d'exemple non limitatif, pour une reconnaissance vocale dans un aéronef militaire, on peut définir typiquement cinq plages de variation du bruit en cabine :

- plage 1 : 0 à 90 dB

- plage 2 : 90 à 98 dB

- plage 3 : 98 à 106 dB

- plage 4 : 106 à 114 dB

- plage 5 : $\geq$ 114 dB

La deuxième étape consiste à modifier sélectivement la chaîne de paramètrisation. En d'autres termes, à chaque plage de fonctionnement correspond une chaîne de paramètrisation différente.

La chaîne de paramètrisation proprement dite est figurée par un bloc 5 comprenant lui-même plusieurs modules : un module 50, que l'on appellera pour la commodité commutateur, un module optionnel 51 de débruitage du signal de parole, un module 52 de calcul des coefficients Bark, un module 53 de configuration des offsets et un module 54 de calcul des cepstres.

La chaîne de paramètrisation 5 présente une configuration proche de celle décrite en regard de la figure 5. En particulier, le module 52 permet de déterminer l'énergie spectrale contenue dans les fenêtres de Bark. Il est identique au module 110 de la figure 5. Le module 54 regroupe, pour sa part, les modules 111 et 112 de la figure 5. Ces modules sont d'ailleurs communs à l'art connu (figure 2 : 110 à 112).

Le calcul de l'énergie spectrale peut être précédé, optionnellement, par un débruitage du signal de parole réalisé dans le module 52. Pour ce faire, le module 51 peut comprendre, classiquement, un filtre de Wiener ou un filtre de Wiener généralisé.

A titre d'exemples non limitatifs, des filtres de Wiener sont décrits dans les livres suivants, auxquels on pourra se référer avec profit :

- Yves THOMAS : "Signaux et systèmes linéaires", éditions MASSON (1994) ; et :

- François MICHAUT : "Méthodes adaptatives pour le signal", édition HERMES (1992).

Le filtre de Wiener reçoit, en entrée, un signal numérique, dit utile, entaché de bruit, par exemple le signal de parole dans l'application décrite, et restitue sur sa sortie ce même signal débarrassé, théoriquement, de la composante bruit. Cependant comme il a été rappelé, si les méthodes de débruitage améliore effectivement le rapport signal sur bruit, il subsiste habituellement un bruit résiduel, d'amplitude généralement non négligeable.

La chaîne de paramètrisation 5 comprend par contre deux composants spécifiques à l'invention.

Le premier, référencé 53, permet, comme dans le cas de la configuration décrite en regard de la figure 5, d'ajouter des valeurs d'offset aux coefficients de Bark. Cependant, la caractéristique avantageuse propre au mode de réalisation préférentiel, illustré par la figure 6, les valeurs d'offset ne sont plus constantes dans le temps. Pour chacune des plages d'énergie précitées, on applique une configuration d'offset distincte. Comme il a été rappelé, le nombre de plages dépend de l'application spécifique envisagée. Dans l'exemple illustré par la figure 6, on a supposé qu'il existait cinq plages, et donc cinq configurations d'offset différentes.

Le second module spécifique est constitué par ce qui a été appelé le commutateur 50. Cet organe détecte le résultat de la comparaison effectuée dans le module de quantification 40. A titre d'exemple, le résultat de la comparaison peut être constitué par un mot binaire de commande, représentant des nombres 1 à 5, et de façon plus générale 1 à $n$, s'il existe n configurations distinctes. L'organe 50 coopère avec le module 53 et lui transmet ce mot binaire de commande par la liaison 500. Ce dernier peut comprendre une zone de mémoire 530, par exemple constituée de registres pour le stockage des différentes configurations d'offset, et une zone de circuits logiques 531 permettant l'ajout des offsets $K_i$ aux seize coefficients de Bark. Le mot binaire transmis par la liaison 500 permet de sélectionner l'une des configurations d'offset enregistrées dans la zone 530 et son application aux coefficients de Bark, de la manière précédemment décrite, avant l'opération de compression logarithmique effectuée dans le module 54.

Le module de reconnaissance de formes 6 peut être réalisé en faisant appel à une méthode en soi classique et bien connue, par exemple du type dit "DTW" (pour "Dynamic Time Warping") ou "HMM" (pour "Hidden Markov Model"). Cependant, il est avantageux que le module de reconnaissance de formes soit informé de la configuration d'offset retenue. En effet, dans les méthodes classiques de reconnaissance de formes, il est d'usage de tenir compte d'un paramètre de seuil dit de "Pruning", qui correspond à la distorsion maximale autorisée pour une locution donnée. Ce paramètre dimensionne le temps de réponse du système. Pour maintenir un temps de réponse constant, il est avantageux de le faire évoluer en corrélation avec l'évolution des offsets. Le module 50 transmet donc aussi, via une liaison 501, un mot de commande au module de reconnaissance de formes 6, en vue d'ajuster le seuil dit de "Pruning" pour chaque configuration d'offset adoptée. L'adaptation nécessaire du bloc 6 ne nécessite qu'une modification minime des circuits standards utilisés à cette fin. Le mot de commande peut aussi être le même que celui transmis au module 53. Dans ce cas, on utilise la même liaison de transmission 500.

De façon tout à fait classique également, une fois la phrase reconnue, les signaux numériques la représentant sont transmis à un bloc d'utilisation 7 : écouteurs, enregistreur, etc.

A la lecture de ce qui précède, on constate aisément que le système qui vient d'être décrit en regard principalement de la figure 6, atteint bien les buts que l'invention s'est fixés.

Il autorise un compromis optimisé entre robustesse et sensibilité, en choisissant, de façon adaptative et en temps réel, les caractéristiques de la chaîne de paramètrisation en fonction du niveau de bruit.

Il permet l'adaptation à des bruits changeants, en analysant le bruit présent pour chaque élocution.

Un système expérimental, pour la mise en oeuvre du procédé de reconnaissance vocale selon un mode de réalisation préférée de l'invention, basé sur la configuration décrite à la figure 6, a montré que le taux de reconnaissance et les performances dans le bruit étaient nettement améliorées. Le taux d'erreurs était typiquement divisé dans un rapport de un à trois.

En contrepartie, les contraintes supplémentaires apportées par le procédé et le système selon l'invention restent très limitées.

Pour la phase d'apprentissage, la mise en oeuvre du procédé selon l'invention ne modifie pas sensiblement la charge de travail de l'opérateur, en ce qui concerne les références acoustiques (références mémorisées). Cependant, le temps de calcul de la station dans laquelle l'apprentissage est réalisé augmente. Ceci est dû au fait qu'il est nécessaire d'effectuer un apprentissage pour chaque configuration d'offset pré-définie. Il doit cependant être remarqué que ces calculs sont effectués une fois pour toutes, ou pour le moins qu'en de rares occasions : modifications du système, augmentation du corpus d'apprentissage, etc.

Par contre, pendant les phases de reconnaissances, c'est-à-dire les phases opérationnelles, le temps de reconnaissance est identique à celui d'une reconnaissance avec paramètrisation cepstrale classique. En effet, le surcoût de temps de calcul nécessité par la quantification de l'énergie du bruit et le chargement des valeurs de configuration d'offset est tout à fait négligeable par rapport au temps de calcul lié à la reconnaissance proprement dite.

D'un point de vue matériel, le système exige un espace mémoire plus important pour stocker les références acoustiques associées aux différentes configurations d'offset. Cependant, du fait des progrès de la technologie actuelle : miniaturisation des organes de mémoire à base de circuits intégrés et augmentation de leur capacité, du fait également de la baisse de prix constante de ce type d'organes, l'exigence précitée reste compatible avec des considérations industrielles et économiques réalistes.

Il a été également montré que le procédé et le système selon l'invention restent compatibles avec les technologies mise en oeuvres dans le domaine de la reconnaissance vocale. L'essentiel des circuits classiques restent utilisables. Le procédé ne nécessite en effet que des adaptations restreintes et l'ajout de quelques modules fonctionnels spécifiques, également en nombre restreint.

Il doit être clair cependant que l'invention n'est pas limitée aux seuls exemples de réalisations explicitement décrits, notamment en relation avec les figures 2 et 6. En particulier, les valeurs numériques n'ont été précisées que pour fixer les idées. Elles dépendent essentiellement de l'application précise visée. C'est notamment le cas en ce qui concerne le nombre de plages d'énergie prédéfinies et du nombre de configurations d'offset qui en résulte.

Il doit être clair aussi que, bien que particulièrement adaptée la reconnaissance vocale dans un aéronef militaire, on ne saurait cantonner l'invention à ce seul type d'applications. Elle s'applique en effet à la reconnaissance vocale dans tous milieux bruités.

## Revendications

1.  Procédé de reconnaissance vocale dans un signal acoustique bruité, le procédé comprenant au moins une phase de numérisation et de découpage dudit signal acoustique sous forme d'une suite de trames temporelles de durée prédéterminée, une phase de paramètrisation desdites trames temporelles de manière à les transformer en une première série de vecteurs de paramètres dans le domaine fréquentiel et une phase de comparaison desdits vecteurs de paramètres de la première série avec des vecteurs de paramètres d'une seconde série, pré-enregistrés dans une phase préliminaire dite d'apprentissage, de manière à obtenir ladite reconnaissance par détermination d'une distance minimale entre les vecteurs de la première série et des vecteurs particuliers de la seconde série, ladite phase de paramètrisation comprenant les étapes suivantes:

    -   le calcul (110) de l'énergie spectrale desdites trames par élévation au carré et l'application d'une suite consécutive de fenêtres de pondération associée chacune à un coefficient de pondération déterminé, reproduisant la forme de filtres caractérisant le système auditif humain, de manière à créer des canaux fréquentiels ;

    -   une compression (111) logarithmique des valeurs énergétiques des signaux présents dans lesdits canaux fréquentiels ;

    -   la génération (112) de ladite suite de vecteurs de paramètres dans le domaine fréquentiel ;

    -   le procédé étant **caractérisé en ce qu'**il comprend une étape consistant en l'ajout (113) d'une valeur prédéterminée, dite de décalage, auxdits coefficients de pondération déterminés, de manière à modifier ladite paramètrisation et à rendre ladite reconnaissance vocale plus robuste en présence de bruit.

2.  Procédé selon la revendication 1, **caractérisé en ce que** lesdites fenêtres de pondération sont associées à des coefficients dits de Bark et sont au nombre de seize.

3.  Procédé selon l'une des revendications 1 ou 2, **caractérisé en ce que** la dite compression logarithmique (111) est obtenue à l'aide d'une fonction Qlog.

4.  Procédé selon l'une quelconque des revendications 1 à 3, **caractérisé en ce que** ladite étape de génération de vecteurs de paramètres (112) dans le domaine fréquentiel consiste à appliquer auxdites valeurs énergétiques compressées une transformée en cosinus discrète et **en ce que** chaque vecteur de paramètre est obtenu en sélectionnant les coefficients deux à neuf de cette transformée en cosinus discrète.

5.  Procédé selon l'une quelconque des revendications 1 à 4, **caractérisé en ce que** la valeur de décalage ajoutée auxdits coefficients de pondération déterminés est variable d'un canal fréquentiel à l'autre, et **en ce que** l'amplitude du décalage est plus élevée pour les coefficients de pondération déterminés associés aux canaux fréquentiels véhiculant les énergies les plus importantes.

6.  Procédé selon la revendication 5, **caractérisé en ce que** l'amplitude desdites valeurs de décalage ajoutées auxdits coefficients de pondération déterminés associés aux canaux des fréquences basses et moyennes du spectre moyen des signaux acoustiques de la parole humaine sont plus élevées que l'amplitude des valeurs de décalage ajoutées aux canaux des fréquences les plus élevées de ce spectre.

7.  Procédé selon l'une quelconque. des revendications 1 à 6, **caractérisé en ce qu'**il comprend une première phase préliminaire consistant à déterminer une suite de plages contiguës de niveaux d'énergies de bruit prédéterminées, une deuxième phase préliminaire consistant à déterminer, pour chacune desdites plages une configuration distincte desdites valeurs de décalage à ajouter auxdits coefficients de pondération déterminés, et une phase supplémentaire comprenant une première étape consistant à quantifier (40) l'énergie du bruit présent dans ledit signal acoustique par comparaison avec ladite série de plages d'énergies contiguës et une deuxième étape consistant à appliquer (50, 53) auxdits coefficients de pondération déterminés une desdites configuration de valeurs de décalage, en fonction du résultat de ladite quantification (40).

8.  Procédé selon la revendication 7, **caractérisé en ce que** le choix de l'une desdites configuration de valeurs de décalage est effectué de telle sorte que l'amplitude de ces valeurs de décalages augmente avec l'amplitude du niveau d'énergie de bruit présent dans ledit signal acoustique.

9.  Procédé selon l'une quelconque des revendications 1 à 8, **caractérisé en ce qu'**il comprend une phase préliminaire supplémentaire consistant à déterminer un modèle (31) d'évolution des caractéristiques du bruit présent dans ledit signal acoustique.

10. Procédé selon l'une quelconque des revendications 1 à 9, **caractérisé en ce qu'**il comprend, avant ladite étape d'application d'une suite consécutive de fenêtres de pondération associées à des coefficients de pondération déterminés, une étape supplémentaire consistant en un débruitage (51) dudit signal acoustique à l'aide d'un filtre de Wiener ou un filtre de Wiener généralisé, de manière à diminuer la composante de bruit présente dans ledit signal acoustique.

11. Système de reconnaissance vocale dans un signal acoustique bruité pour la mise en oeuvre du procédé selon l'une quelconque des revendications 1 à 10, comprenant une chaîne de paramétrisation (11', 5) desdites trames temporelles comportant un premier module (110, 52) pour le calcul de l'énergie spectrale desdites trames par élévation au carré et l'application d'une suite consécutive de fenêtres de pondération, associées chacune à un coefficient de pondération déterminé, de manière à créer lesdits canaux fréquentiels, un deuxième module (113, 53) ajoutant à l'ensemble desdits coefficients de pondération déterminés une valeur de décalage, un troisième module (111, 54) opérant une compression logarithmique sur lesdits coefficients de pondération déterminés et un module (112, 54) appliquant une transformée en cosinus discrète sur lesdits coefficients de pondération déterminés compressés de manière à obtenir ladite première série de vecteurs de paramètres, et des moyens de reconnaissances de formes (6) comparant lesdits vecteurs de paramètres de la première série avec des vecteurs de paramètres de ladite seconde série de manière à obtenir ladite reconnaissance vocale, par calcul de distances entre vecteurs des première et seconde séries.

12. Système de reconnaissance vocale selon la revendication 11, **caractérisé en ce qu'**il comprend des moyens (40) de quantification de l'énergie du bruit présent dans les dites trames et de comparaison avec une série de plages énergétiques pré-établies de manière à sélectionner une configuration de valeurs de décalages parmi une suite de configuration distinctes, en nombre égal au nombre desdites plages énergétiques pré-établies et des moyens (50, 53) pour appliquer ladite configuration auxdits coefficients de pondération déterminés par ajout desdites valeurs de décalage.

13. Système de reconnaissance vocale selon la revendication 12, **caractérisé en ce qu'**il comprend en outre des moyens (31) pour modéliser le bruit présent dans lesdites trames, les signaux représentant le bruit modélisé étant transmis auxdits moyens (40) de quantification de l'énergie du bruit.

14. Système de reconnaissance vocale selon l'une quelconque des revendications 11 à 13, **caractérisé en ce qu'**il comprend en outre des moyens (51) de réduction du bruit présent dans ledit signal acoustique et **en ce que** ces moyens comporte un filtre de Wiener ou un filtre de Wiener généralisé.

**Claims**

1. Process for voice recognition in a noisy acoustic signal, the process comprising at least one phase of digitizing and chopping the said acoustic signal into the form of a string of temporal frames of predetermined duration, a phase of parameterizing the said temporal frames in such a way as to transform them into a first series of vectors of parameters in the frequency domain and a phase of comparing the said vectors of parameters of the first series with vectors of parameters of a second series, which are prerecorded in a preliminary so-called learning phase, in such a way as to achieve the said recognition by determining a minimum distance between the vectors of the first series and particular vectors of the second series, the said parameterizing phase comprising the following steps:

   - the calculation (110) of the spectral energy of the said frames by squaring and applying a consecutive string of weighting windows each associated with a determined weighting coefficient, reproducing the shape of filters characterizing the human auditory system, in such a way as to create frequency channels;
   - a logarithmic compression (111) of the energy values of the signals present in the said frequency channels;
   - the generation (112) of the said string of vectors of parameters in the frequency domain;
   - the process being **characterized in that** it comprises a step consisting in adding (113) a predetermined value, the so-called shift value, to the said determined weighting coefficients, in such a way as to modify the said parameterization and to render the said voice recognition more robust in the presence of noise.

2. Process according to Claim 1, **characterized in that** the said weighting windows are associated with so-called Bark coefficients and are sixteen in number.

3. Process according to one of Claims 1 or 2, **characterized in that** the said logarithmic compression (111) is achieved with the aid of a Qlog function.

4. Process according to any one of Claims 1 to 3, **characterized in that** the said step of generating vectors of parameters (112) in the frequency domain consists in applying a discrete cosine transform to the said compressed energy values and **in that** each parameter vector is obtained by selecting the coefficients two to nine of this discrete cosine transform.

5. Process according to any one of Claims 1 to 4, **characterized in that** the shift value added to the said determined weighting coefficients can vary from one frequency channel to another, and **in that** the amplitude of the shift is higher for the determined weighting coefficients associated with the frequency channels conveying the largest energies.

6. Process according to Claim 5, **characterized in that** the amplitude of the said shift values added to the said determined weighting coefficients associated with the channels of the low and medium frequencies of the mean spectrum of the acoustic signals of human speech are higher than the amplitude of the shift values added to the channels of the highest frequencies of this spectrum.

7. Process according to any one of Claims 1 to 6, **characterized in that** it comprises a first preliminary phase consisting in determining a string of contiguous spans of levels of predetermined noise energies, a second preliminary phase consisting in determining, for each of the said spans a distinct configuration of the said shift values to be added to the said determined weighting coefficients, and a supplementary phase comprising a first step consisting in quantifying (40) the energy of the noise present in the said acoustic signal by comparison with the said series of contiguous energy spans and a second step consisting in applying (50, 53) one of the said configurations of shift values to the said determined weighting coefficients, as a function of the result of the said quantification (40).

8. Process according to Claim 7, **characterized in that** the choice of one of the said configuration of shift values is performed so that the amplitude of these shift values increases with the amplitude of the level of noise energy present in the said acoustic signal.

9. Process according to any one of Claims 1 to 8, **characterized in that** it comprises a supplementary preliminary phase consisting in determining a model (31) of evolution of the characteristics of the noise present in the said acoustic signal.

10. Process according to any one of Claims 1 to 9, **characterized in that** it comprises, before the said step of applying a consecutive string of weighting windows associated with determined weighting coefficients, a supplementary step consisting of a denoising (51) of the said acoustic signal with the aid of a Wiener filter or a generalized Wiener filter, in such a way as to decrease the noise component present in the said acoustic signal.

**11.** System for voice recognition in a noisy acoustic signal for implementing the process according to any one of Claims 1 to 10, comprising a pathway (11', 5) for parameterizing the said temporal frames comprising a first module (110, 52) for calculating the spectral energy of the said frames by squaring and applying a consecutive string of weighting windows, each associated with a determined weighting coefficient, in such a way as to create the said frequency channels, a second module (113, 53) adding a shift value to the set of the said determined weighting coefficients, a third module (111, 54) operating a logarithmic compression on the said determined weighting coefficients and a module (112, 54) applying a discrete cosine transform to the said compressed determined weighting coefficients in such a way as to obtain the said first series of vectors of parameters, and means for recognizing shapes (6) comparing the said vectors of parameters of the first series with vectors of parameters of the said second series in such a way as to achieve the said voice recognition, by calculating distances between vectors of the first and second series.

**12.** System for voice recognition according to Claim 11, **characterized in that** it comprises means (40) for quantifying the energy of the noise present in the said frames and comparing with a series of preestablished energy spans in such a way as to select a configuration of values of shifts from among a distinct configuration string, equal in number to the number of the said preestablished energy spans and means (50, 53) for applying the said configuration to the said determined weighting coefficients by adding the said shift values.

**13.** The system for voice recognition according to Claim 12, **characterized in that** it furthermore comprises means (31) for modelling the noise present in the said frames, the signals representing the model noise being transmitted to the said means (40) for quantifying the energy of the noise.

**14.** System for voice recognition according to any one of Claims 11 to 13, **characterized in that** it furthermore comprises means (51) for reducing the noise present in the said acoustic signal and **in that** these means comprise a Wiener filter or a generalized Wiener filter.

**Patentansprüche**

**1.** Verfahren zur Spracherkennung in einem verrauschten akustischen Signal, wobei das Verfahren zumindest eine Digitalisierungsphase, eine Phase der Zerlegung des akustischen Signals in eine Folge von zeitlichen Rahmen vorbestimmter Dauer, eine Phase der Parametrisierung der zeitlichen Rahmen, sodaß diese in eine erste Serie von Parametervektoren im Frequenzbereich umgewandelt werden, und eine Phase des Vergleichs der Parametervektoren der ersten Serie mit Parametervektoren einer zweiten Serie aufweist, die in einer Vorphase, Lernphase genannt, eingespeichert wurden, sodaß die Spracherkennung durch Bestimmung einer Mindestdistanz zwischen den Vektoren der ersten Serie und besonderen Vektoren der zweiten Serie erhalten wird und wobei die Phase der Parametrisierung die folgenden Schritte aufweist:

-   die Berechnung (110) der spektralen Energie der Rahmen durch Quadrierung und die Anwendung einer Folge von Wichtungsfenstern auf je einen bestimmten Wichtungskoeffizient, die die Form von das menschliche Hörsystem charakterisierenden Filtern reproduzieren, sodaß Frequenzkanäle erzeugt werden,
-   eine logarithmische Kompression (111) der Energiewerte der in den Frequenzkanälen vorhandenen Signale,
-   die Erzeugung (112) der Folge von Parametervektoren in dem Frequenzbereich,

**dadurch gekennzeichnet, daß** das Verfahren einen Schritt (113) enthält, bei dem ein vorbestimmter Wert, Offsetwert genannt, zu den bestimmten Wichtungskoeffizienten hinzugefügt wird, sodaß die Parametrisierung verändert und die Spracherkennung in Gegenwart eines Rauschens rauschfester wird.

**2.** Verfahren nach Anspruch 1, **dadurch gekennzeichnet, daß** die Wichtungsfenster sogenannten BARK-Koeffizienten zugeordnet sind und daß 16 solche Fenster vorhanden sind.

**3.** Verfahren nach einem der Ansprüche 1 und 2, **dadurch gekennzeichnet, daß** die logarithmische Kompression (11) mithilfe einer Qlog-Funktion erhalten wird.

**4.** Verfahren nach einem beliebigen der Ansprüche 1 bis 3, **dadurch gekennzeichnet, daß** der Schritt der Erzeugung der Parametervektoren (112) in dem Frequenzbereich in der Anwendung einer diskreten Cosinus-Transformierten auf die komprimierten Energiewerte besteht und daß jeder Parametervektor durch Auswahl der Koeffizienten zwei bis 9 dieser diskreten Cosinustransformierten erhalten wird.

**5.** Verfahren nach einem beliebigen der Ansprüche 1 bis 4, **dadurch gekennzeichnet, daß** der zu den bestimmten Wichtungskoeffizienten hinzugefügte Offsetwert von einem Frequenzkanal zum nächsten variabel ist und daß die Offset-Amplitude für die bestimmten Wichtungskoeffizienten größer ist, die den Frequenzkanälen zugeordnet sind, welche die größten Energiewerte aufweisen.

**6.** Verfahren nach Anspruch 5, **dadurch gekennzeichnet, daß** die Amplitude der Offsetwerte, die den bestimmten und den unteren und mittleren Frequenzkanälen des mittleren Spektrums der akustischen Signale der menschlichen Stimme zugeordneten Wichtungskoeffizienten größer sind als die Amplituden der Offsetwerte, die den Kanälen der höchsten Frequenzen dieses Spektrums hinzugefügt werden.

**7.** Verfahren nach einem beliebigen der Ansprüche 1 bis 6, **dadurch gekennzeichnet, daß** es eine erste Vorphase enthält, die darin besteht, eine Folge von aneinander anschließenden Bereichen von Pegeln vorbestimmter Rauschenergie zu bestimmen, eine zweite Vorphase, die darin besteht, für jeden der Bereiche eine eigene Konfiguration der den bestimmten Wichtungskoeffizienten hinzuzufügenden Offset-Werte zu bestimmen, und eine zusätzliche Phase mit einem ersten Schritt, der darin besteht, die Rauschenergie in dem akustischen Signal durch Vergleich mit der Serie der aneinander anschließenden Energiebereiche zu quantifizieren (40), und einen zweiten Schritt, der darin besteht, auf die bestimmten Wichtungskoeffizienten eine der Konfigurationen von Offset-Werten abhängig vom Ergebnis der Quantifizierung anzuwenden (50, 53).

**8.** Verfahren nach Anspruch 7, **dadurch gekennzeichnet, daß** die Wahl einer der Konfigurationen von Offset-Werten so durchgeführt wird, daß die Amplitude der Offset-Werte mit der Amplitude des Rauschenergiepegels des akustischen Signals steigt.

**9.** Verfahren nach einem beliebigen der Ansprüche 1 bis 8, **dadurch gekennzeichnet, daß** es eine zusätzliche Vorphase enthält, die darin besteht, ein Modell (31) der Entwicklung der Merkmale des in dem akustischen Signal vorhandenen Rauschens zu bestimmen.

**10.** Verfahren nach einem beliebigen der Ansprüche 1 bis 9, **dadurch gekennzeichnet, daß** es vor dem Schritt der Anwendung einer Folge von Wichtungsfenstern, die bestimmten Wichtungskoeffizienten zugeordnet sind, einen zusätzlichen Schritt enthält, der in einer Rauschminderung (51) des akustischen Signals mithilfe eines Wiener-Filters oder generalisierten Wiener-Filters besteht, sodaß die Rauschkomponente im akustischen Signal abnimmt.

**11.** System zur Spracherkennung in einem verrauschten akustischen Signal zur Durchführung des Verfahrens nach einem beliebigen der Ansprüche 1 bis 10, mit einer Parametrisierungskette (11', 5) für die zeitlichen Rahmen, die einen ersten Modul (110, 52) zur Berechnung der spektralen Energie der Rahmen durch Quadrierung und zur Anwendung einer Folge von Wichtungsfenstern auf je einen bestimmten Wichtungskoeffizient, sodaß die Frequenzkanäle erzeugt werden, einen zweiten Modul (113, 53), der zu allen bestimmten Wichtungskoeffizienten einen Offset-Wert hinzufügt, einen dritten Modul (111, 54), der eine logarithmische Kompression der bestimmten Wichtungskoeffizienten durchführt, und einen Modul (112, 54) aufweist, der eine diskrete Cosinustransformierte auf die bestimmten und komprimierten Wichtungskoeffizienten anwendet, sodaß sich eine erste Serie von Parametervektoren ergibt, und mit Mitteln (6) zur Formerkennung, die die Vektoren von Parametern der ersten Serie mit Parametervektoren der zweiten Serie vergleichen, um die Spracherkennung durch Berechnung von Distanzen zwischen den Vektoren der ersten Serie und denen der zweiten Serie zu erreichen.

**12.** System zur Spracherkennung nach Anspruch 11, **dadurch gekennzeichnet, daß** es Mittel (40) zur Quantifizierung der Rauschenergie in den Rahmen und zum Vergleich mit einer Serie von vorab gebildeten Energiebereichen, sodaß eine Konfiguration von Offset-Werten aus einer Folge von diskreten Konfigurationen ausgewählt wird, deren Anzahl der Anzahl von vorbestimmten Energiebereichen gleicht, und Mittel (50, 53) zur Anwendung der Konfiguration auf die bestimmten Wichtungskoeffizienten durch Hinzufügung der Offset-Werte aufweist.

**13.** System zur Spracherkennung nach Anspruch 12, **dadurch gekennzeichnet, daß** es außerdem Mittel (31) zur Modellbildung des in den Rahmen vorhandenen Rauschens enthält, wobei die das Rauschen in dem Modell darstellenden Signale an die Mittel (40) zur Quantifizierung der Rauschenergie übermittelt werden.

14. System zur Spracherkennung nach einem beliebigen der Ansprüche 11 bis 13, **dadurch gekennzeichnet, daß** es außerdem Mittel (51) zur Minderung des im akustischen Signal vorhandenen Rauschens aufweist und daß diese Mittel ein Wiener-Filter oder ein generalisiertes Wiener-Filter enthalten.

## FIG_1

## FIG_2

## FIG_3

Fenêtres de Bark

FBi

## FIG_4

## FIG_5

## FIG_6

FIG_7

ENERGIE DE SIGNAL SONORE

TEMPS

BRUIT
AMBIANT

RESPIRATION

BRUIT
AMBIANT

PAROLE

BRUIT
AMBIANT

EP 1 131 813 B1

U(t)

CONVERSION A/N

## FIG_8

STOCKAGE DES
ECHANTILLONS

INITIALISATION: n=1
LECTURE TRAME n
CALCUL D'ENERGIE

INCREMENTATION
n=n+1

COMPARAISON D'ENERGIES
TRAMES n ET n-1
SEUILS S ET 1/S

TRAME n
NON COMPATIBLE

TRAME n
COMPATIBLE

NON — N1<N<N2 ?

N =N2 — NON

AJOUT DE LA
TRAME n
AU MODELE

OUI

OUI

ARRET DE
L'ELABORATION

MODELE EN COURS
D'ELABORATION

RELANCE NOUVELLE
RECHERCHE

CALCUL D'ENERGIE
MOYENNE DU MODELE

CONSERVATION DU
MODELE PRECEDENT

COMPARAISON AVEC
L'ENERGIE DU MODELE
PRECEDENT. SEUIL SR

STOCKAGE D'UN
NOUVEAU MODELE

STOCKAGE DU MODELE ACTIF

UTILISATION